# EUROPEAN PATENT SPECIFICATION

(11) **EP 1 061 044 B1**
(45) Date of publication and mention of the grant of the patent: **21.06.2006**
(21) Application number: 00305131.5
(22) Date of filing: 16.06.2000
(51) Int. Cl.: C01B 31/02, C01B 3/00, B01J 19/08

(54) **Production of single-walled carbon nanotubes**
Herstellung von einwandigen Kohlenstoffnanoröhren
Production de nanotubes de carbone à paroi simple

(30) Priority: 16.06.1999 CN 99113021; 16.06.1999 CN 99113022
(43) Date of publication of application: 20.12.2000
(73) Proprietor: Institute of Metal Research of the Chinese Academy of Sciences, Heping, Shenyang 110015 (CN)
(72) Inventor: Cheng, Huiming, Heping, Shenyang, China 110015 (CN); Liu, Chang, Heping, Shenyang, China 110015 (CN); Cong, Hongtao, Heping, Shenyang, China 110015 (CN); LIU, Min, Heping, Shenyang, China 110015 (CN); Fan, Yueying, Heping, Shenyang, China 110015 (CN); Su, Ge, Heping, Shenyang, China 110015 (CN)
(74) Representative: Stuart, Ian Alexander

(56) References cited:
- EP-A- 0 665 187
- LIU, C. ET AL: "Hydrogen storage in single-walled carbon nanotubes at room temperature" SCIENCE (WASHINGTON, D. C.) (1999), 286(5442), 1127-1129 , 5 November 1999 (1999-11-05), XP002148937
- LIU, C. ET AL: "Semi-continuous synthesis of single-walled carbon nanotubes by a hydrogen arc discharge method" CARBON (1999), 37(11), 1865-1868 , 1999, XP000946280
- ZHAO X ET AL: "Preparation of high-grade carbon nanotubes by hydrogen arc discharge" CARBON,US,ELSEVIER SCIENCE PUBLISHING, NEW YORK, NY, vol. 35, no. 6, 1997, pages 775-781, XP004073597 ISSN: 0008-6223
- WANG X K ET AL: "CARBON NANOTUBES SYNTHESIZED IN A HYDROGEN ARC DISCHARGE" APPLIED PHYSICS LETTERS,US,AMERICAN INSTITUTE OF PHYSICS. NEW YORK, vol. 66, no. 18, 1 May 1995 (1995-05-01), pages 2430-2432, XP000507611 ISSN: 0003-6951
- DEMONCY N ET AL: "Filling carbon nanotubes with metals by the arc-discharge method: the key role of sulfur" EUROPEAN PHYSICAL JOURNAL B, AUG. 1998, EDP SCIENCES;SPRINGER-VERLAG, FRANCE, vol. 4, no. 2, pages 147-157, XP000951420 ISSN: 1434-6028
- AJAYAN P M ET AL: "GROWTH MORPHOLOGIES DURING COBALT-CATALYZED SINGLE-SHELL CARBON NANOTUBE SYNTHESIS" CHEMICAL PHYSICS LETTERS,NL,AMSTERDAM, vol. 215, no. 5, 10 December 1993 (1993-12-10), pages 509-517, XP000677222
- JYUN-HWEI HWANG ET AL: "Well-aligned carbon nanotubules" ADVANCED MATERIALS, SEPT. 1993, GERMANY, vol. 5, no. 9, pages 643-646, XP000388216 ISSN: 0935-9648

## Description

The present invention relates to a hydrogen arc discharge method for the synthesis of single-walled carbon nanotubes (SWNTs) which can be applied on a large scale. Under an atmosphere of H₂, an anode, preferably of large size, comprising a mixture of graphite powder, catalyst metal(s) and growth promoter is consumed with the growth of SWNTs. The angle between the anode and cathode may be adjustable, preferably in the range of 30°-80°. The catalysts used are preferably two or more kinds of metals. They are selected from Fe, Co, Ni and Y, which have been proved to be advantageous for the growth of SWNTs. The proportion of catalysts is in the range of 2.5-5.0 at%. By these processes, SWNTs with a large diameter can be synthesized on a large scale with the advantages of semi-continuous synthesis, low cost and high quality. The SWNTs obtained can be employed as a hydrogen storage material.

In view of the gasoline shortage and environmental pollution produced by automobiles, various technologies are being developed to replace gasoline-powered internal combustion engines. Among the alternative fuel technologies, the hydrogen fuel cell is believed to be ideal because of its advantages of renewable and nonpolluting performance. For the purpose of identifying the practicability of the fuel cell powered vehicle, the D.O.E. (U.S.) issued an energy density goal for vehicular hydrogen storage: 6.5 wt% H₂ or 62kg H₂/m³ which indicates that the identified fuel cell can provide a 350 mile range of driving in a vehicle.

Compared to other hydrogen storage systems, such as liquid hydrogen systems, compressed hydrogen systems, metal hydride systems and super active carbon systems, carbon nanotube systems, especially single-walled carbon nanotubes (SWNTs) are expected to be closest to the D.O.E. energy density goals and can be made into an ideal hydrogen storage system which needs to be light, compact, relatively inexpensive, safe, easy to use and reusable without the need for regeneration.

The most widely used method to produce SWNTs is the electric arc discharge, which was first employed by S. Iijima et al., Nature, 363, 603 and Bethune et al Nature, 363, 605, in 1993. However, the purity of the products they obtained was very poor, so that the characterization and utilization of SWNTs were limited to a great extent. In 1997, C. Journet et al (Nature, 388, 156) obtained SWNTs with higher yield and purity through the optimization of synthesis parameters. The main characteristics of their method include: He of 86 x 10³ Pa was used as buffer gas; two graphite rods were used as electrodes, and the size of the electrodes were: anode-Φ 16x40mm, cathode-Φ 16x100mm. A Φ 3.5x40mm pore was drilled along the axis of the anode and filled with a mixture of graphite powder and catalysts (Y, Ni). The anode and the cathode were perpendicular to each other. The morphologies of the products can be classified as follows: ①Rubbery soot formed on the internal wall of the reactor; ②Web-like substance between the cathode and reactor wall; ③cylinder deposit on the tip of the cathode; ④Porous, light, hoop-like substance formed around cylinder deposit. Since then, no remarkable progress happened to the electric arc discharge method. Although the obtained SWNTs have nearly defect-free microstructure, the traditional electric arc discharge method is difficult to apply to commercial or large-scale synthesis because of its shortcomings: the yield is limited by the size of electrodes and reactor; the producing process is not continuous; and the content of impurities such as amorphous carbon is high.

Demoncy et al., European Physical J.B 4 (2) 147-157 (1998) produced filled carbon nanotubes using an arc discharge in a helium atmosphere between graphite electrodes whereof the anode had a hole filled with a mixture or graphite and an element selected from Cr, Ni, Yb, Dy, S and Ge.

Since SWNTs have aroused a great deal of interest from the fundamental viewpoint as well as for potential applications, high-quality SWNTs are demanded for both research and commercial purposes. Consequently, there is an urgent need for a new method which can produce SWNTs with semi-continuous or continuous synthesis in large scale, high quality and low cost.

### SUMMARY OF THE INVENTION

In accordance with the present invention, there is provided a hydrogen arc discharge method for the production of SWNTs in which, in a hydrogen atmosphere with a hydrogen pressure of 50-400 torr (7-53 KPa), a (generally large-size) anode comprising graphite powder, catalyst metal(s) and growth promoter is consumed, with the growth of SWNTs. The SWNTs may have high hydrogen storage capacity. The anode comprises a composition of: (i) graphite powder, (ii) 2.5-5.0 at % of catalyst metals selected from Fe, Co, Ni, Y, and (iii) 0.5-1 at % of Sulphur or solid sulphide as growth promoter. After being evenly dispersed, the composition of the reactants is filled into holes on the upper surface of a graphite body to form the anode, or mold-pressed into targets as the anode. The anode will be consumed with the growth of SWNTs under the atmosphere of H₂. Mold-pressing may use a pressure of about 10 MPa. The anode may be rotatably mounted so that different surface portions can confront the cathode.

The obtained SWNTs may be treated by (i) application of acids or oxidative reactants, (ii) heating in vacuum, or (iii) through a combined treatment of (i) and (ii), to prepare high-capacity hydrogen storage materials.

In some preferred embodiments of the present invention, the diameter of the anode is about 10-20 times larger than that of the cathode, so that the synthesis time is increased to produce large-scale SWNTs.

In some preferred embodiments of the present invention, the angle between the anode and the cathode can be adjusted from 30° to 80°. Changing the angle can change the quality and morphology of the products.

In some preferred embodiments of the present invention, argon (no more than 20 vol%) can be mixed into H₂ as buffer gas.

In some preferred embodiments of the present invention, the post-treatment techniques for SWNTs could be: (a) soaking in (i) HNO₃ acid (20-65%), (ii) HCl acid (10-37%)or (iii) oxidative reactants, (b) vacuum heating at 400-1200°, preferably 400-900°C, or (c) the combination of (a) and (b). Soaking may last 24-48 hours. Vacuum heating may last 2-4 hours. The treatment can give SWNTs with a hydrogen adsorption capacity in excess of 3 wt%.

Some embodiments of the invention will now be described by way of example with reference to the accompanying drawings, in which:
FIGS. 1 is schematic diagram of an apparatus used for synthesizing SWNTs on a large scale by a semi-continuous hydrogen arc discharge method, the apparatus including a large cylindrical anode having a circular upper face in which several holes have been drilled and filled with reactants;
FIGS. 2 is a schematic diagram of a variant of the apparatus of Fig. 1 in which the reactants are pressed to form a cylindrical target as the anode directly;

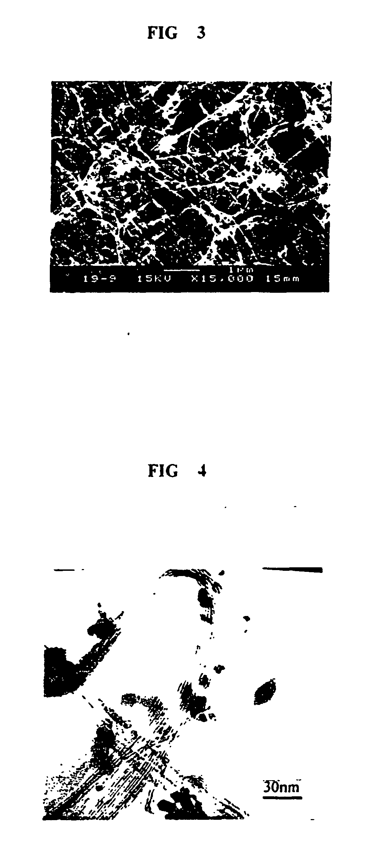

FIGS. 3 is a SEM image of the SWNTs prepared by a method embodying the invention;
FIGS. 4 is a TEM image of the SWNTs;
FIGS. 5 is Raman spectrum of the SWNTs; and
FIGS. 6 is schematic diagram of an apparatus used for testing the hydrogen storage capacity of SWNTs.

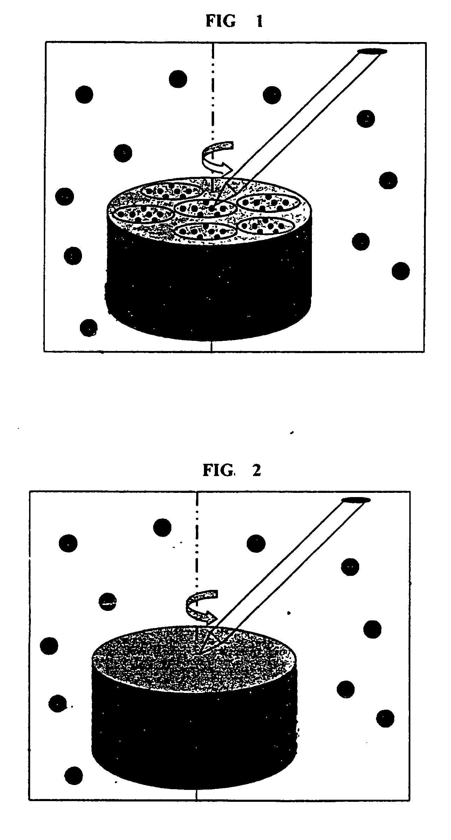

A suitable reactor, of large size, is a copper-lined stainless steel shell containing electrodes between which an electric arc discharge can be generated under an atmosphere of H₂ or a mixture of H₂ and Ar. The anode shown in Fig. 1 is a graphite cylinder (Φ400x35mm) on whose upper surface several holes (Φ 10x15mm) are drilled to fill the reactants. Fig. 2 shows an alternative type of anode which is a cylindrical target formed from compressed reactants (Φ 400x35mm). The anode is placed on a rotatable disc. The cathode is a graphite rod (Φ10mm) and can be moved towards the anode to maintain the distance between them, e.g. at about 2mm.

The reactants are weighed individually and then evenly dispersed in alcohol solution. After having been dried, the reactants are filled into the holes on the upper surface of the anode, or pressed in a mould to form a cylindrical target to be used directly as the anode.

Under an atmosphere of H₂, a current (100-150A. DC) is passed through the electrodes to create plasma. By the effect of high temperature, the reactants are co-evaporated to synthesize SWNTs. With the co-evaporation of the reactants, the cathode is continuously translated to keep a constant distance between the electrodes. After the reactants in one hole (or one part of the target) are consumed, the synthesis process is stopped and the disc under the anode is rotated properly to sublimate the reactants in the next hole (or next part of the target). At the same time, taking into account the consumption of H₂, the buffer gas is pumped out and re-filled in the interval. The typical reaction time is 3 minutes.

In some processes, Ar (no more than 20 vol%) is incorporated with H₂ to be employed as buffer gas.

In order to improve the yield and quality of the products, related to the traditional electric arc discharge method, some innovation to the apparatus and optimization to the reactants are employed in the present invention.

Compared with traditional buffer gas, He, the price of H₂ is much lower, so that the synthesis cost can be lowered. At the same time, some intrinsic characteristics of hydrogen are beneficial to the growth of SWNTs: high conductivity is helpful to cool down the plasma rapidly and creates a high temperature gradient to improve the growing of SWNTs; hydrogen can selectively corrode amorphous carbon impurities and thus improve the purity of the products; hydrogen can promote the vaporization of metal catalysts and prevent the catalysts from being poisoned.

In order to prepare SWNTs at high yield, the synthesis apparatus is also innovated. The reactor is preferably of the shape of a cylinder (at least Φ600x400mm) and the electrodes are not vertically opposite but make an oblique angle (30°-80°). These features are beneficial to prepare SWNTs on a large scale. In our comparative experiments, no evident differences in the yield of products were observed when the angle was adjusted (as an instance, see examples 1 and 2), but a suitable angle can accelerate the flowing of the plasma and then is considered to be helpful to synthesize SWNTs in large scale. In most examples of the present invention, the angle between the anode and cathode is selected to be 50° according to the shape of apparatus.

Moreover, the reactants were mixed evenly and filled into the holes on the upper surface of the anode cylinder to co-evaporate graphite powders and catalysts more homogeneously. The rotatable anode makes this synthesis process a semi-continuous or continuous one. And it is more convenient to operate when the reactants are compressed into the shape of cylinder and then used as raw material target.

The application of a sulphur-containing promoter is highly preferred in the present invention. Without the sulphur-containing promoter, yields of SWNTs may be low. When a suitable sulphur-containing promoter is employed, it is capable of producing large-scale, high-quality SWNTs.

There are mainly three kinds of products obtained: (a) web-like substances and (b) aligned SWNT ropes hanging between the cathode the upper chamber wall; (c) thin films formed on the upper chamber wall. which can be peeled off in large slices (-200 cm²), and are self-fluttering, self-adhering to hands and vessels. The existing change in the form of the products may be attributed to the different opposite orientations of the electrodes, which lead to different ways that the plasma flows.

To obtain a high-capacity hydrogen storage material, the as-prepared SWNTs may be soaked in acids such as HNO₃ (20-65%) or HCl (10-37%) and then heat-treated in vacuum for 2-4 hours. The results of hydrogen absorption experiments based on the pretreated SWNTs indicate that the hydrogen storage capacity of SWNTs is about 3-5 wt% at moderate high pressure and room temperature, and the hydrogen storage capacity of SWNTs can be further improved if the quality is improved and the pre-treatment parameters are optimized.

In brief, in this invention hydrogen, rather than helium, was selected as buffer gas, so that high-quality SWNTs can be synthesized at low cost. The synthesis apparatus is innovated to realize the semi-continuous synthesis process and the yield can be high; since the diameter of the SWNTs obtained is large (mean value: 1.85nm), they can uptake a large amount of hydrogen at room temperature. And the hydrogen storage capacity of SWNTs is further improved by acid soaking and heat treatment, and the hydrogen storage capacity is measured to be 3-5 wt%. Through this hydrogen arc discharge method, SWNTs can be prepared with the advantages of semi continuity, low cost, large scale and high quality. The processes of acid soaking and heat treatment give high hydrogen storage capacity of SWNTs, which indicates that SWNTs are promising candidates for hydrogen storage.

The present invention will be illustrated in more detail with reference to the following examples, which should not be construed to be limiting in scope of the present invention.

### EXAMPLE 1

The apparatus used is shown in figure 1.

2.0g reactants containing 2.6 at% Ni, 0.7 at% Fe, 0.7 at% Co, 0.75 at% FeS and 95.25 at% graphite powders were filled into a hole on the upper surface of the anode cylinder. The angle between the anode and the cathode was modified to 40°. The electric arc was operated under the atmosphere of H₂ using 150A, dc. The distance between electrodes was maintained at about 2 mm and the reaction time was typically 3 minutes. The product obtained was of rope-like, film-like and web-like substance with a total weight of 185 mg.

### EXAMPLE 2

The apparatus used is shown in figure 1.

2.0g reactants containing 2.6 at% Ni, 0.7 at% Fe, 0.7 at% Co, 0.75 at% FeS and 95.25 at% graphite powders were filled into a hole on the upper surface of the anode cylinder. The angle between the anode and the cathode was modified to 70°. The electric arc was operated under the atmosphere of H₂ using 150A, dc. The distance between electrodes was kept at about 2 mm and the reaction time was typically 3 minutes. The product obtained was of rope-like, film-like and web-like substance with a total weight of 180 mg.

### EXAMPLE 3

The apparatus used is as shown figure 1.

2.0g reactants containing 2.6 at% Ni, 1.0 at% Co, 0.75 at% FeS and 95.65 at% graphite powders were filled into a hole on the upper surface of the anode cylinder. The angle between the anode and the cathode was modified to 50°. The electric arc was operated under the atmosphere of H₂ using 150A, dc. The distance between electrodes was kept at about 2 mm and the reaction time was typically 3 minutes. The product obtained was of rope-like, film-like and web-like substance with a total weight of 165 mg.

### EXAMPLE 4

The apparatus used is shown in figure 1.

2.0g reactants containing 2.6 at% Ni, 1.0 at% Y, 0.75 at% FeS and 95.65 at% graphite powders were filled into a hole on the upper surface of the anode cylinder. The angle between the anode and the cathode was modified to 50°. The electric arc was operated under the atmosphere of H₂ using 150A, dc. The distance between electrodes was kept at about 2 mm and the reaction time was typically 3 minutes. The product obtained was of rope-like, film-like and web-like substance with a total weight of 175 mg.

### EXAMPLE 5

The apparatus used is shown in figure 1.

2.0g reactants containing 2.6 at% Ni, 1.0 at% Fe, 0.75 at% FeS and 95.65 at% graphite powders were filled into a hole on the upper surface of the anode cylinder. The angle between the anode and the cathode was modified to 50°. The electric arc was operated under the atmosphere of H₂ using 150A, dc. The distance between electrodes was kept at about 2 mm and the reaction time was typically 3 minutes. The product obtained was of rope-like, film-like and web-like substance with a total weight of 160 mg.

### EXAMPLE 6

The apparatus used is shown in figure 1.

2.0g reactants containing 2.6 at% Ni, 0.7 at% Fe, 0.7 at% Co, 1.0 at% S and 95 at% graphite powders were filled into a hole on the upper surface of the anode cylinder. The angle between the anode and the cathode was modified to 50°. The electric arc was operated under the atmosphere of H₂ using 150A, dc. The distance between electrodes was kept at about 2 mm and the reaction time was typically 3 minutes. The product obtained was of rope-like, film-like and web-like substance with a total weight of 170 mg.

### EXAMPLE 7

The apparatus used is shown in figure 1.

2.0g reactants containing 2.6 at% Ni, 0.7 at% Fe, 0.7 at% Co, 0.75 at% FeS and 95.25 at% graphite powders were filled into a hole on the upper surface of the anode cylinder. The angle between the anode and the cathode was modified to 50°. The electric arc was operated under the atmosphere of H₂ using 150A, dc. The distance between electrodes was kept at about 2 mm and the reaction time was typically 3 minutes. The product obtained was of rope-like, film-like and web-like substance with a total weight of 175 mg.

### EXAMPLE 8

The apparatus used is shown in figure 1.

2.0g reactants containing 2.6 at% Ni, 0.7 at% Fe, 0.7 at% Co, 0.75 at% FeS and 95.25 at% graphite powders were filled into a hole on the upper surface of the anode cylinder. The angle between the anode and the cathode was modified to 50°. The electric arc was operated under the mixed atmosphere of H₂ (200 torr) (226 x 10² Pa) and Ar (50 torr) (67 x 10²Pa) using 150A, dc. The distance between electrodes was kept at about 2 mm and the reaction time was typically 3 minutes. The product obtained was of rope-like, film-like and web-like substance with a total weight of 167 mg.

### EXAMPLE 9

The apparatus used is shown in figure 2.

The homogeneous mixture of 2.6 at% Ni, 0.7 at% Fe, 0.7 at% Co, 0.75 at% FeS and 95.25 at% graphite powders was pressed into cylinder shape to act as the anode. The angle between the anode and the cathode was modified to 50°. The electric arc was operated under the atmosphere of H₂ using 150A, dc. The distance between electrodes was kept at about 2 mm. The reaction time was typically 3 minutes and then we changed the buffer gas and rotated the anode to discharge the reactant in another part. The total reaction time was 30 minutes. The product obtained was of rope-like, film-like and web-like substance with a total weight of 980 mg.

### EXAMPLE 10

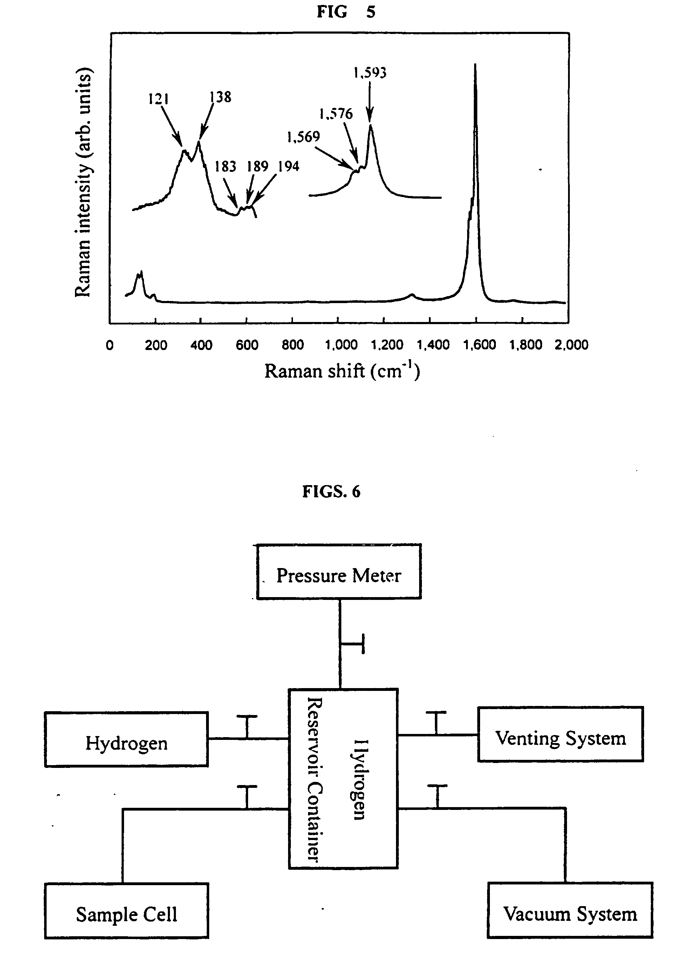

The apparatus used is shown in figure 6.

The as-prepared SWNTs (about 600 mg) were soaked in 37% HCl acid for 48 hours, rinsed by de-ionized water and then dried in an oven. After being weighed accurately, the sample was put into the sample cell as shown in figure 6 to undergo vacuum for 5 hours at 150°C. And then the hydrogen storage capacity of SWNTs was measured at moderate high pressure (100-120atm) and room temperature. The hydrogen storage capacity of SWNTs tested was determined to be 4.02 wt%.

### EXAMPLE 11

The apparatus used is shown in figure 6.

The as-prepared SWNTs (about 600 mg) were soaked in 37% HCl acid for 48 hours, rinsed by de-ionized water and then dried in an oven. The sample obtained was further vacuum heat-treated at 500°C for 2 hours. After being weighed accurately, the sample was put into the sample cell as shown in figure 6 to undergo vacuum for 5 hours at 150°C. And then the hydrogen storage capacity of SWNTs was measured at moderate high pressure (100-120atm) and room temperature. The hydrogen storage capacity of SWNTs tested was determined to be 4.58 wt%.

### EXAMPLE 12

The apparatus used is shown in figure 6.

The as-prepared SWNTs (about 600 mg) were vacuum heat-treated at 400 °C for 2 hours. After being weighed accurately, the sample was put into the sample cell as shown in figure 6 to undergo vacuum for 5 hours at 150°C. And then the hydrogen storage capacity of SWNTs was measured at moderate high pressure (100-120atm) and room temperature. The hydrogen storage capacity of SWNTs tested was determined to be 4.24 wt%.

## Claims

1. A method for the production of single walled carbon nanotubes ("SWNTs") comprising (a) providing a reactor having a hydrogen atmosphere with a hydrogen pressure of 50-400 torr (7-53kPa) and electrodes including an anode comprising a composition of graphite powder, 2.5-5.0 at. % of catalysts selected from Fe, Co, Ni and Y; and 0.5-1 at. % of a growth promoter selected from sulphur and solid sulphides; said anode being either a graphite cylinder having a surface with several holes which have been filled with said composition or a body prepared by pressing said composition in a mould; and (b) passing a current between the electrodes to produce a hydrogen arc discharge, whereby said anode is consumed with the growth of SWNTs.

2. The method of claim 1 wherein said hydrogen atmosphere contains up to 20 vol% of argon

3. A method according to claim 1 wherein the SWNT material produced by said hydrogen arc discharge is treated with 20-65% HNO₃ or 10-37% HCl.

4. A method according to claim 1 or 3 wherein the SWNT material is heated in a vacuum for 2-4 hours at 400-900°C.

5. A method according to any preceding claim wherein the axes of the anode and cathode are adjusted to be at an angle in the range 30-80°.

6. Apparatus for carrying out the method of any preceding claim comprising a reactor vessel, means for introducing a hydrogen atmosphere into said vessel; and electrodes in said vessel including a said anode comprising said composition as defined in claim 1.

7. Apparatus according to claim 6 wherein the angle between the anode and the cathode is adjustable in the range 30-80°.

## Patentansprüche

1. Verfahren zur Herstellung von einwandigen Kohlenstoffnanoröhren ("SWNTs"), umfassend (a) die Bereitstellung eines Reaktors, der eine Wasserstoffatomsphäre mit einem Wasserstoffdruck von 50-400 Torr (7-53 kPa) aufweist, und von Elektroden, die eine Anode mit einer Zusammensetzung aus Graphitpulver, 2,5-5,0 Atom-% Katalysatoren, ausgewählt aus Fe, Co, Ni und Y, und 0,5-1 Atom-% eines wachstumsfördernden Stoffes, ausgewählt aus Schwefel und festen Sulfiden, umfassen; wobei die Anode entweder ein Graphitzylinder mit einer Oberfläche mit mehreren Löchern, die mit der Zusammensetzung gefüllt wurden, oder ein Körper, der durch Pressen der Zusammensetzung in einer Form hergestellt wurde, ist; und (b) das Durchschicken von Strom durch die Elektroden, um eine Wasserstoffbogenentladung zu erzeugen, wodurch die Anode durch das Wachstum von SWNTs verbraucht wird.

2. Verfahren nach Anspruch 1, worin die Wasserstoffatmosphäre bis zu 20 Vol.-% Argon enthält.

3. Verfahren nach Anspruch 1, worin das SWNT-Material, das durch diese Wasserstoffbogenentladung erzeugt wird, mit 20-65 % HNO₃ oder 10-37 % HCl behandelt wird.

4. Verfahren nach Anspruch 1 oder 3, worin das SWNT-Material im Vakuum 2-4 Stunden lang auf 400-900 °C erhitzt wird.

5. Verfahren nach einem der vorangegangenen Ansprüche, worin die Achsen der Anode und der Kathode auf einen Winkel im Bereich von 30-80° eingestellt werden.

6. Gerät zur Durchführung eines Verfahrens nach einem der vorangegangenen Ansprüche, umfassend ein Reaktionsgefäß, ein Mittel zur Einführung einer Wasserstoffatomsphäre in das Gefäß und Elektroden in diesem Gefäß, welche die Anode mit der in Anspruch 1 definierten Zusammensetzung umfassen.

7. Gerät nach Anspruch 6, worin der Winkel zwischen der Anode und der Kathode im Bereich von 30-80° einstellbar ist.

## Revendications

1. Méthode pour la production de nanotubes de carbone à paroi simple ("SWNT") consistant à (a) prévoir un réacteur ayant une atmosphère d'hydrogène avec une pression d'hydrogène de 50-400 torr (7 -53kPa) et des électrodes comportant une ano de comprenant une composition de poudre de graphite, 2,5-5,0 % at de catalyseurs sélectionnés parmi Fe, Co, Ni et Y; et 0,5-1 % at d'un promoteur de croissance sélectionné parmi soufre et sulfures solides; ladite anode étant soit un cylindre de graphite ayant une surface avec plusieurs trous qui ont été remplis de ladite composition ou un corps préparé en pressant ladite composition dans un moule; et (b) faire passer un courant entre les électrodes pour produire une décharge par arc d'hydrogène, aïnsi ladite anode est consommée avec la croissance des SWNT.

2. Méthode de la revendication 1 où ladite atmosphère d'hydrogène contient jusqu'à 20% en volume d'argon.

3. Méthode selon la revendication 1 où le matériel de SWNT produit par ladite décharge à l'arc d'hydrogène est traité avec 20-65% de HNO₃ ou 10-37% de HCl.

4. Méthode selon la revendication 1 ou 3 où le matériel de SWNT est chauffé dans un vide pendant 2-4 heures à 400-900°C.

5. Méthode selon toute revendication précédente, où les axes de l'anode et de la cathode sont ajustés pour être à un angle dans la gamme de 30-80°.

6. Appareil pour effectuer la méthode de toute revendication précédente comprenant un récipient de réacteur, un moyen pour introduite une atmosphère d'hydrogène dans ledit récipient; et des électrodes dans ledit récipient comprenant une dite anode comprenant ladite composition telle que définie à la revendication 1.

7. Appareil selon la revendication 6 où l'angle entre l'anode et la cathode est ajustable dans la gamme de 30 - 80°.
